(19) Europäisches Patentamt / European Patent Office / Office européen des brevets

(11) **EP 1 762 368 A1**

(12) **EUROPEAN PATENT APPLICATION**

(43) Date of publication:
**14.03.2007 Bulletin 2007/11**

(51) Int Cl.:
*B29C 65/16* (2006.01)　　*C08K 5/00* (2006.01)
*C08L 81/02* (2006.01)　　*C08K 7/14* (2006.01)

(21) Application number: **06119763.8**

(22) Date of filing: **30.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.09.2005 JP 2005253963**

(71) Applicant: **ORIENT CHEMICAL INDUSTRIES, LTD. Osaka-shi (JP)**

(72) Inventors:
- **Hatase, Yoshiteru**
  **Neyagawa-shi**
  **Osaka (JP)**
- **Yushina, Heihachi**
  **c/o Orient Chemic. Industr. Ltd.**
  **Neyagawa-shi**
  **Osaka (JP)**

(74) Representative: **Liedl, Christine et al**
**c/o Hansmann & Vogeser,**
**Albert-Rosshaupter-Strasse 65**
**81369 München (DE)**

(54) **Laser ray transmitting colored resin composition and related art**

(57)　Laser ray transmitting colored resin composition comprising a polyphenylene sulfide resin and a colorant having an endothermic peak between 200°C and 300°C as determined by TG/DTA thermal analysis, wherein the difference $T_C$-$T_N$ between the crystallization point $T_C$ of the laser ray transmitting colored resin composition and the crystallization point $T_N$ of the same composition as said composition except for not containing the aforementioned colorant, is not less than 0°C as determined by DSC thermal analysis. Laser ray transmitting material made of the laser ray transmitting colored resin composition, and having one exothermic energy peak and one endothermic energy peak as determined by DSC thermal analysis. The laser ray transmitting colored resin composition excellent in molding accuracy, good in molded product appearance and gloss, capable of preventing or effectively reducing the gap between the materials to be welded in the case of a molded product used for laser welding, and good in heat resistance and fastness, and the laser ray transmitting material excellent in dimension stability and shape stability and capable of preventing or effectively reducing the gap between the materials to be welded when used for laser welding.

**EP 1 762 368 A1**

## Description

The present invention relates to a laser ray transmitting colored resin composition and a laser ray transmitting material made of the resin composition, a laser ray transmitting colored resin composition for forming a laser ray transmitting material, a method of producing a laser ray transmitting material, a laser ray transmitting material for laser welding, and a method of producing a laser welded product.

As a method of joining materials made of a thermoplastic synthetic resin, a method based on laser welding is known. As such, laser welding is performed, for example, as descried below. One material that transmits laser and another material that absorbs laser are brought into contact with each other. When a laser ray is irradiated to the contact portion of the two materials from the laser ray transmitting material side, the laser ray that has passed through the laser ray transmitting material is absorbed by the laser ray absorbing material, whereby the laser ray absorbing material generates heat. By this heat, the laser ray absorbing material is molten around the portion that has absorbed the laser, and the laser ray transmitting material in contact with the portion is also molten, whereby the two materials fuse together at the contact portion. Upon solidification of the molten resin due to temperature reduction, the laser ray transmitting material and the laser ray absorbing material are joined with sufficient weld strength.

Features of laser welding as such include the capability of welding without bringing the laser generation portion into contact with the portion to be welded, the minimal thermal effect on the surrounding portion because the heating is localized, freedom from the problem of mechanical vibration, the capability of welding of materials having a fine portion or complex steric structure, high reproducibility, maintenance of high airtightness, high weld strength, inconspicuous border of the welded portion, and no generation of dust etc. Also, secure welding is achieved by simple operation, and weld strength equivalent to or more than that expected by conventional methods of joining resin materials, such as fastening with fasteners (bolts, screws, clips, etc.), adhesion using adhesives, vibration welding, and ultrasonic welding, is obtained. In addition, labor saving, productivity improvements, production cost reductions, etc. can be achieved because vibration and heat have minimal effects.

With these features, laser welding is suitable for the joining of functional components, electronic components, etc., for which the avoidance of the influence of vibration and heat is desired in, for example, automobile industry, electric/electronic industry and other fields, and is also appropriately applicable to the joining of resin parts of complex shapes.

As an example technology concerning laser welding, an attempt is described in Japanese Unexamined Patent Publication No. HEI-11-170371. This is a method of laser welding comprising a step wherein a laser ray is irradiated so that it focuses on a portion where an opaque material comprising a laser ray absorber and a thermoplastic synthetic resin, and a colorless transparent material comprising a laser ray transmitting thermoplastic synthetic resin, are in contact with each other. In this case, however, the welded portion differs from the non-welded portion in color and smoothness, when viewed from the laser ray transmitting material side, posing a problem of poor appearance, because the laser ray transmitting material is colorless and transparent.

When portions of a laser ray transmitting material and a laser ray absorbing material in contact with each other are joined by laser welding, it is of paramount importance to control the possible gap between the contact portions to be within a sufficiently small range.

Accordingly, when laser welding is adopted as a means of joining in actual production settings, it is the mainstream to perform welding while the possible gap between the materials to be joined is reduced by pressurization using an air clamp and the like. Such means of gap reduction by pressurization are described in, for example, Japanese Unexamined Patent Publication No. SHO-63-118237, which relates to a method of producing a lamination structure, Japanese Unexamined Patent Publication No. 2002-337236, which relates to a method of welding resin materials, Japanese Unexamined Patent Publication No. 2004-66739, which relates to a method of laser welding and laser welding equipment, and elsewhere.

However, the means of gap reduction by pressurization has been posing a problem of being accompanied by increased production costs and decreased productivity (for example, tact time prolongation etc.) associated with expenses for introduction of pressurization equipment, including air clamps, and with time taken to set up the materials to be laser welded to pressurization equipment.

The present invention has been developed in view of the aforementioned problems in the prior art, and is intended to provide a laser ray transmitting colored resin composition excellent in molding accuracy, good in molded product appearance and gloss, capable of preventing or effectively reducing the gap between the materials to be welded in the case of a molded product used for laser welding, and good in heat resistance and fastness, a laser ray transmitting material excellent in dimension stability and shape stability and capable of preventing or effectively reducing the gap between the materials to be welded when used for laser welding, a method of producing a laser ray transmitting material using the aforementioned resin composition, and a method of producing a laser welded product using the aforementioned laser ray transmitting material.

Accomplishing the above-described object, the laser ray transmitting colored resin composition of the present invention is a laser ray transmitting colored resin composition containing at least a polyphenylene sulfide resin and a colorant, wherein said colorant has an endothermic peak between 200°C and 300°C as determined by TG/DTA thermal analysis, and the difference $T_C-T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

The laser ray transmitting material of the present invention is made of the aforementioned laser ray transmitting colored resin composition, and has one exothermic energy peak and one endothermic energy peak as determined by DSC thermal analysis.

The method of the present invention of producing a laser ray transmitting material comprises molding the aforementioned laser ray transmitting colored resin composition so that said material has one exothermic energy peak and one endothermic energy peak as determined by DSC thermal analysis.

The laser ray transmitting material for laser welding of the present invention is made of the aforementioned laser ray transmitting colored resin composition, and has one exothermic energy peak and one endothermic energy peak as determined by DSC thermal analysis.

A mode of the method of the present invention of producing a laser welded product comprises irradiating the aforementioned laser ray transmitting material, which is substantially in contact with a laser ray absorbing material, with a laser ray for laser welding so that said laser ray transmitting material transmits the laser ray and the laser ray is absorbed by said laser ray absorbing material, whereby the contact portions of said two materials are welded.

In this production method, it is also possible, for example, to laser weld one laser ray absorbing material with the laser ray transmitting material for laser welding of the present invention from a plurality of directions.

Another mode of the method of the present invention of producing a laser welded product is a method of producing a laser welded product by welding one material, which is the aforementioned laser ray transmitting material, and another material together,

which comprises irradiating said one material, which is substantially in contact with said another material via a laser ray absorbing thin layer, with a laser ray for laser welding so that said laser ray transmitting material transmits the laser ray and the laser ray is absorbed by said laser ray absorbing thin layer, whereby said two materials are welded via the laser ray absorbing thin layer.

In this case, the laser ray absorbing thin layer may be formed with a material independent from the aforementioned two materials, or may be formed on either or both of the aforementioned two materials.

The laser ray transmitting colored resin composition of the present invention is excellent in molding accuracy, capable of producing a molded product of good appearance and gloss, capable of preventing or effectively reducing the gap between the materials to be welded when the laser ray transmitting colored material molded therewith is used for laser welding, colored to make the laser welded portion with the laser ray absorbing material hardly visible from the side of the laser ray transmitting material which is a molded product, and good in heat resistance and fastness.

Also, because the laser ray transmitting material of the present invention is excellent in dimension stability and shape stability, and capable of preventing or effectively reducing the gap between the materials to be welded when used for laser welding, it is possible to obtain a laser welded product of stable tensile strength and good quality. According to the laser welded product production method of the present invention, it is possible to obtain a laser welded product of stable weld strength and good quality because the gap between the materials to be welded can be prevented or effectively reduced by using the laser ray transmitting material of the present invention. Simple laser equipment can also be used.

Figure 1 is an oblique view of Example Process for laser welded Product 1.
Figure 2 is an oblique view of Example Process for laser welded Product 2.
Figure 3 is an oblique view of Example Process for laser welded Product 2.
Figure 4 is an oblique view of a laser ray transmitting test piece.
Figure 5 is an oblique view of warpage measurement.
Figure 6 is a schematic cross-sectional view of a laser welding test.
Figure 7 is the DSC curve obtained in Example 3.
Figure 8 is the DSC curve obtained in Example 4.
Figure 9 is the DSC curve obtained in Example 5.
Figure 10 is the DSC curve obtained in Example 6.
Figure 11 is the DSC curve obtained in Comparative Example 2.
Figure 12 is the TG/DTA curves obtained with eBIND LTW-8400C.

The laser ray transmitting colored resin composition of the present invention contains at least a polyphenylene sulfide resin ("a PPS resin" as mentioned hereunder means a polyphenylene sulfide resin) and a colorant.

The laser ray transmitting colored resin composition of the present invention may consists essentially of a polyphenylene sulfide resin and a colorant.

The colorant used in the resin composition of the present invention is required to have an endothermic peak between 200°C and 300°C as determined by TG/DTA thermal analysis. More specifically, the colorant used in the resin composition of the present invention is a colorant having a substantial endothermic peak only between 200°C and 300°C as determined by TG/DTA thermal analysis involving a temperature rise from 30°C to 550°C.

In the TG/DTA thermal analysis of this colorant, it is possible to employ the measuring conditions of an atmosphere of air supply at 200 ml/min with a temperature rise from 30°C to 550°C at a rate of 10°C/min. The TG/DTA analyzer used may be SII EXSTAR6000 (product name) manufactured by Seiko Instruments Inc.

Also, it is necessary that the difference $T_C$-$T_N$ between the crystallization point $T_C$ of the resin composition of the present invention and the crystallization point $T_N$ of the same composition as said laser ray transmitting colored resin composition except for not containing said colorant (resin or resin composition), as determined by DSC thermal analysis, is not less than 0°C. Of course, the two crystallization points should be determined under the same conditions.

In this DSC thermal analysis, it is possible to employ the measuring conditions of a temperature rise from 30°C to 330°C at a rate of 10°C/min and a subsequent temperature reduction from 330°C to 30°C at a rate of 10°C/min. The DSC meter used may be SII EXSTAR6000 (product name) manufactured by Seiko Instruments Inc.

By fulfilling the requirement for the above-described resin composition to have a $T_C$-$T_N$ value of not be lower than 0°C, possible bending deformation (bending deformation of an actually obtained molded product compared with a desired molded product) in a molded product (for example, a molded product obtained by injection molding) made of the resin composition can be effectively prevented. For this reason, it is possible to prevent or effectively reduce the gap between a laser ray transmitting material made of the resin composition of the present invention and a laser ray absorbing material when used for laser welding of the two materials, whereby the weld quality of the laser welded product made of the two materials is stabilized.

$T_C$-$T_N$ preferably falls in the range of 30°C > or = $T_C$-$T_N$ > or = 5°C, more preferably 20°C > or = $T_C$-$T_N$ > or = 10°C. This ensures that a laser ray transmitting material of high molding accuracy is obtained.

The laser ray transmitting material of the present invention is made of the aforementioned laser ray transmitting colored resin composition, and is required to have one exothermic energy peak and one endothermic energy peak as determined by DSC thermal analysis. More specifically, said material is required to have substantially only one exothermic energy peak and only one endothermic energy peak as determined by DSC thermal analysis involving a temperature rise from 30°C to 330°C and a subsequent temperature fall from 330°C to 30°C.

In this DSC thermal analysis, it is possible to employ the measuring conditions of a temperature rise from 30°C to 330°C at a rate of 10°C/min and a subsequent temperature reduction from 330°C to 30°C at a rate of 10°C/min. The DSC meter used may be SII EXSTAR6000 (product name) manufactured by Seiko Instruments Inc.

PPS resins are relatively slow in crystallization speed among engineering plastics. For this reason, it is common practice to have a relatively high mold temperature setting (normally 150°C) to ensure the complete crystallization of the resin when a PPS resin is molded using a mold.

If the mold temperature is set at a low level in molding a PPS resin, the molten resin in the mold undergoes quenching, so that the molded product obtained has a completely crystallized portion and an incompletely crystallized portion, resulting in variation in the degree of crystallization within the molded product. When such a molded product is subjected to DSC measurement, the incompletely crystallized portion crystallizes during the analytical process, resulting in an exothermic energy peak known as recrystallization point. If a recrystallization point (exothermic energy peak) occurs before reaching the melting point (endothermic energy peak) during the temperature rise in DSC measurement, the PPS resin molded product can be judged to be in an unstable crystallization state, and to be poor in dimension stability and shape stability.

The laser ray transmitting material of the present invention is obtained by molding the aforementioned laser ray transmitting colored resin composition of the present invention so that said material has one exothermic energy peak and one endothermic energy peak as determined by DSC thermal analysis.

A molded product obtained by injection-molding a colorant-free PPS resin exhibits a recrystallization point even when the mold temperature for molding is 130°C. For obtaining a molded product with no recrystallization point by injection-molding a colorant-free PPS resin, the mold temperature is desirably set around 150°C. However, the resin composition of the present invention produces a molded product with no recrystallization point even when injection-molded at a mold temperature of 130°C because it contains the aforementioned colorant. Hence, a colored molded product of good dimension stability and shape stability can be obtained while reducing production costs by setting the mold temperature at a low level.

More specifically, the laser ray transmitting material of the present invention has a warpage of not more than 0.5 mm, preferably not more than 0.2 mm. The term warpage as used herein refers to the greatest value obtained by molding using a mold with a rectangular parallelepiped cavity of 80 mm length x 50 mm width x 1 mm thickness to obtain a molded product, placing the molded product on a horizontal plane with each of the top and reverse sides in contact with the horizontal plane, pressing each corner with a 100 g weight, measuring the height of each opposite corner above the horizontal plane, and choosing the greatest height.

The laser ray transmitting material of the present invention is excellent in molding accuracy, and capable of producing a molded product of good appearance and gloss. In this regard, it is preferable, more specifically, that the laser ray transmitting material of the present invention have a glossiness of not less than 100 as determined at a beam angle of 60 degrees. Provided that the glossiness of the laser ray transmitting material is not less than 100 as determined at a beam angle of 60 degrees, the influence of any gap between the laser ray transmitting material and a laser ray absorbing material on laser welding is reduced because of the high surface smoothness of said laser ray transmitting material when the laser ray transmitting material is superposed on the laser ray absorbing material during laser welding, so that weld quality can be more stabilized.

As the colorant having an endothermic peak between 200°C and 300°C as determined by the above-described TG/DTA thermal analysis, there may be used one kind of dye or two kinds or more of dyes in combination (the visible light absorption bands thereof may or may not overlap each other), which allows laser transmission in the wavelength band of laser (wavelength from 800 nm to 1600 nm). In the case of a colored resin composition containing a colorant having an endothermic peak between 200°C and 300°C and a PPS resin, the colorant becomes uniformly dispersed in the resin at a temperature close to the melting point of the PPS resin (melting point as determined by DSC determination). For this reason, when a colored resin composition containing such a colorant and a PPS resin is molded, the resulting colored resin molded product is relatively uniform, provided that the mold temperature is 130°C to 150°C.

On the other hand, a colorant having an endothermic peak below 200°C often produces a wide variety of colorant decomposition products. When a colored resin composition containing such a colorant and a PPS resin is injection-molded, crystallization progresses quickly in some portions and slowly in other portions even when the mold temperature is 150°C. Therefore, the colored resin molded product obtained has an incompletely crystallized portion, resulting in a recrystallization point as determined by DSC measurement. Additionally, uneven crystal sizes occur.

The colorant is not subject to structural limitation, as long as it transmits one or two kinds or more of laser ray of particular wavelengths used in laser welding. Specifically, various organic dyes/pigments such as of the azo series, azo metal complex series, azomethine series, anthraquinone series, quinacridone series, dioxazine series, diketopyrrolopyrrole series, anthrapyridone series, isoindolinone series, indanthrone series, perinone series, perylene series, indigo series, thioindigo series, quinophthalone series, quinoline series, and triphenylmethane series can be mentioned. In view of compatibility with PPS resin, organic dyes are preferable.

As examples of mixed colorants of two or more kinds of colorants, those exhibiting various colors such as green (for example, blue+yellow combination), purple (for example, blue+red combination), black (for example, blue+yellow+red combination, or purple+yellow combination) by combining blue, purple, and green anthraquinone-series dyes and a yellow and/or red colorant, can be mentioned. As examples of black colorants that are important in industrial applications, black colorants as a combination of an anthraquinone-series blue dye, a red colorant of other structure and a yellow colorant of other structure, and black colorants as a combination of an anthraquinone-series green dye and a red colorant of other structure can be mentioned. Of these examples, azo-series red dyes, perinone-series red dyes, and anthrapyridone-series red dyes can be mentioned as preferable red colorants.

As commercial products of such colorants, there may be mentioned eBIND LTW-8400C (each of "eBIND" and "LTW" is product name), a laser ray transmitting colorant manufactured by Orient Chemical Industries, Ltd., and the like.

The colorant content in the laser ray transmitting colored resin composition of the present invention is preferably 0.01 to 10% by weight relative to PPS resin. More preferably, the colorant content is 0.03 to 5% by weight, and still more preferably 0.05 to 1% by weight.

Examples of the light source for laser light used in the present invention include solid-state lasers (Nd-YAG, $YVO_4$, RUBY), semiconductor lasers, tunable lasers, and titanium sapphire lasers. Of these light sources, a laser having a laser emission wavelength between 800 and 1600 nm, a region of longer wavelengths than those of visible light, is suitably useful. More preferably, the light source is a laser having a laser emission wavelength between 800 and 1100 nm. In addition, a halogen lamp or xenon lamp that generates an infrared ray having a wavelength of not less than 700 nm may be used as the light source.

$T_{colored\ resin}/T_{noncolored\ resin}$, i·e., the ratio of $T_{colored\ resin}$, the transmittance for a laser ray having a wavelength of 940 nm in the laser ray transmitting colored resin composition of the present invention, and $T_{noncolored\ resin}$, the transmittance for a laser ray having a wavelength of 940 nm in the same composition as said laser ray transmitting colored resin composition except for not containing a colorant, is preferably not less than 0.5. More preferably, this ratio is 0.7 to 1.1, and still more preferably 0.8 to 1.1.

A PPS resin is a polymer consisting mainly of repeat units of thiophenylene group represented by (-ø-S-) [ø is a phenylene group having or not having a substituent]. This resin can be obtained by polymerizing a monomer synthesized by reacting para-dichlorobenzene and alkali sulfide at high temperature under high pressure. This resin is available in roughly two types: linear type, wherein desired degree of polymerization has been achieved solely by a polymerization step using a polymerization aid, and crosslinked type, wherein a low-molecular polymer is thermally crosslinked in the presence of oxygen. The linear type, in particular, is suitable for the present invention because it excellently transmits laser ray. As the PPS resin in the present invention, a polymer alloy can be used. As examples thereof, PPS/polyolefin-series alloy, PPS/polyamide-series alloy, PPS/polyester-series alloy, PPS/polycarbonate-series alloy, PPS/polyphenylene ether-series alloy, PPS/liquid crystal polymer-series alloy, PPS/polyimide-series alloy, and PPS/polysulfone-series alloy can be mentioned. The melt viscosity of the PPS resin is not subject to limitation, as long as it allows kneading in a molten state; a PPS resin having a melt viscosity in the range from 5 to 2000 Pa·s can normally be used, with preference given to one having a melt viscosity in the range from 100 to 600 Pa·s. These PPS resins have characteristics suitable for applications such as electronic components and automobile parts.

The colored resin composition of the present invention can contain appropriate amounts of various reinforcing materials according to its application and intended use. As this reinforcing material, any material usable for reinforcement of ordinary synthetic resin can be used without particular limitation.

As preferable examples of the above-described reinforcing material, glass fiber, carbon fiber, other inorganic fibers, organic fibers (aramid, nylon, polyester and liquid crystal polymers etc.) and the like can be mentioned. For reinforcement of the colored resin composition of the present invention, which is required to transmit laser ray, glass fiber is preferred. The fiber length of glass fiber is preferably 2 to 15 mm and the fiber diameter is preferably 1 to 20 $\mu$m. The form of glass fiber is not subject to limitation, and may be of any one, e.g., roving or milled fiber. These glass fibers may be used singly or in combination of two or more kinds. Their content is preferably 5 to 120 parts by weight per 100 parts by weight of PPS resin. If the content is less than 5 parts by weight, it is difficult to attain a sufficient reinforcing effect of the glass fiber; if the content exceeds 120 parts by weight, moldability is likely to decrease. Also, when joining by laser welding is intended, the two resins become molten and joined together in principle, hence weld strength increases as the glass fiber content decreases. Considering this aspect, the glass fiber content is preferably 10 to 60 parts by weight, particularly preferably 20 to 50 parts by weight.

As other reinforcing materials, there may be added tabular fillers such as mica, sericite and glass flake, silicates such as talc, kaolin, clay, wollastonite, bentonite and aluminum silicate, metal oxides such as alumina, silicon oxide, magnesium oxide, zirconium oxide and titanium oxide, carbonates such as calcium carbonate, magnesium carbonate and dolomite, sulfates such as calcium sulfate and barium sulfate, and particulate fillers such as glass beads, ceramic beads, boron nitride and silicon carbide.

The colored resin composition of the present invention may also be formulated with various additives as necessary. Such additives include, for example, auxiliary colorants, dispersing agents, stabilizers, plasticizers, modifier, ultraviolet absorbents or light stabilizers, antioxidants, antistatic agents, lubricants, mold-releasing agents, crystallization promoters, crystal nucleating agents, flame retardants, and elastomers for improving impact resistance.

The colored resin composition of the present invention is obtained by blending raw materials by an optionally chosen method of blending. It is generally preferable that these blending ingredients be homogenized as far as possible. Specifically, for example, all raw materials are blended and homogenized in a mechanical mixer such as a blender, kneader, Banbury mixer, roll or extruder to yield a colored resin composition. Alternatively, for example, after some raw materials are blended in a mechanical mixer, the remaining ingredients are added, followed by further blending and homogenization, to yield a resin composition. Additionally, for example, previously dry-blended raw materials may be kneaded and homogenized in a molten state in a heated extruder, then extruded into a needle, which needle is then cut into desired length to yield a colored granular resin composition as colored pellets.

The colored resin composition of the present invention can also be prepared by further diluting a master batch containing a high concentration of the aforementioned colorant in PPS resin with PPS resin. By using a master batch, a colored resin composition with a colorant well dispersed therein is obtained. The aforementioned master batch is obtained by an optionally chosen method. A master batch can be obtained by, for example, blending a master batch base resin powder or pellets and a colorant in a mechanical mixer such as a tumbler or super-mixer, and then pelletizing or coarsely granulating the ingredients by thermal melting in an extruder, batch-wise kneader, roll kneader, or the like. A master batch can also be obtained by, for example, adding a colorant to a master batch base resin while remaining in solution after synthesis, and then removing the solvent.

Molding of the colored resin composition of the present invention can be achieved by various procedures in common use. For example, the colored resin composition of the present invention can be molded using colored resin pellets made of the colored resin composition of the present invention in a processing machine such as an extruder, injection molding machine or roll mill. It can also be molded by blending PPS resin pellets or powder, a milled colorant, and where necessary various additives, in an appropriate mixer, and molding this blend using a processing machine. It is also possible, for example, to add a colorant to a monomer containing an appropriate polymerization catalyst, and polymerize this blend into a desired PPS resin, which resin is molded by an appropriate method. Any commonly used method of molding can be adopted, e.g., injection molding, extrusion molding, compression molding, foaming molding, blow molding, vacuum molding, injection blow molding, rotation molding, calender molding, and solution casting. By such molding, laser ray transmitting materials in various shapes can be obtained.

Generally, advantages of laser welding include increased degrees of freedom for the shapes of the molds because of the capability of 3-dimensional welding, improved appearance because of freedom from burrs on the welded surface unlike in vibration welding, freedom from vibration and wear dust, and easy applicability to electronic components. Its disadvantages include the necessity of pre-investment in laser welding equipment, and gap formation between materials to be welded due to sink after molding the resin material. The problem with this gap, in particular, is of greatest concern in performing welding by operating laser welding equipment. For this reason, it is current practice to prepare a custom-made pressing jig suitable for the shape of the materials to be welded, and perform welding while the gap is removed or reduced by pressing the subject of welding using an air clamp and the like.

In contrast, the laser ray transmitting material of the present invention has high molding accuracy and a small warpage. For this reason, in laser welding using the laser ray transmitting material of the present invention, the gap between the laser ray transmitting material and laser ray absorbing material at the contact portions thereof is prevented from increasing due to the warpage, so that there is a small need for gap reduction etc. using an air clamp etc. and laser welding can be performed using relatively simple equipment. The gap between the aforementioned two materials is preferably 0 to 0.05 mm.

Available types of laser welding equipment include the scanning type, in which the laser ray irradiator moves, the masking type, in which the materials to be welded move, and the type in which the materials to be welded are irradiated with laser ray from multiple directions simultaneously; the scanning type drawing attention from the automobile industry; currently, with a scanning speed of, for example, 5 m/min, serving as the criterion for production tact time.

Because laser welding relies on the conversion of light energy of laser to heat energy, welding performance is considerably influenced by welding conditions. Generally, the amount of heat produced on the absorbent material surface by laser ray irradiation can be calculated by the equation below:

$$\text{Amount of heat on absorbent material surface (J/mm}^2\text{)} = [\text{laser ray output (W)} \times \text{transmittance (\%) of laser ray transmitting material} \times 1/100]/[\text{laser spot diameter (mm)} \times \text{laser ray scanning speed (mm/sec)}] \dots \text{(I)}$$

As indicated by Equation (I), it is required that laser welding equipment of the high output type be used, and that scanning speed be increased, to increase production efficiency in laser welding. In the case of a material that excellently transmits laser ray, obtained from polyamide resin, an improvement of production efficiency by such a means is attempted.

However, in laser welding using a PPS resin, it cannot be concluded that welding conditions of high output and high speed are always desirable because the component itself is not so large because of the intended use of the resin; rather, there is a tendency for low output and low speed to produce more stable weld quality and hence to be desirable.

Additionally, in the case of PPS resin, because the resin's laser transmittance is not high, the percentage of laser ray absorbed in the laser ray transmitting material until the laser reaches the surface of the laser ray absorbing material is relatively high, so that failures such as ignition on the surface of the laser ray transmitting material are likely to occur when laser welding is performed at high output. Therefore, in laser welding of PPS resin, it is important to take measures against these failures, for example, a glass plate is placed on the laser ray transmitting material and allowed to absorb the heat generated by the laser ray transmitting material.

Generally, to increase weld strength, it is necessary to allow the laser ray absorbing material to generate a given amount of surface heat. To this end, various conditions, including increasing the laser output, decreasing the scanning speed, and reducing the spot diameter according to the properties of the subject laser ray absorbing material and laser ray transmitting material, must be considered.

A molded material of the colored resin composition of the present invention permits non-contact welding even when using a halogen lamp that generates an infrared ray having a wavelength of not less than 700 nm. Regarding lamp arrangement in this case, a number of lamps are often arranged in a strip. Examples of the mode of irradiation include the scanning type in which the lamp irradiation portion moves, the masking type in which the materials to be welded move, and the type in which laser is irradiated from the lamps to the materials to be welded from multiple directions simultaneously. This irradiation can be performed with infrared irradiation width, irradiation time, irradiation energy and the like adjusted as appropriate.

However, because a halogen lamp has an energy distribution mainly in the near infrared region, energy can occur on the shorter wavelength side of the energy distribution, i.e., in the visible light region. In such cases, since welding scar can occur on the surface of the material, the energy in the visible light region may be blocked using a cut filter and the like.

Because molded products of PPS resin are often produced as small-sized products such as electric or electronic components, laser welding is suitable for their joining as it permits fine control of welding conditions in a broad range of settings.

In laser welding, it is desirable to use a laser ray transmitting material that transmits at least 15% of the laser ray in a longer wavelength region (between 800 and 1600 nm) than that of visible light used in the laser welding. It is more preferable to use a laser-transmitting material having an infrared transmittance of at least 20% for one or two or more wavelengths out of the 808 nm, 840 nm, and 940 nm wavelengths of semiconductor laser, and the 1064 nm wavelength of YAG laser. If the transmittance is lower than this level, laser ray of these wavelengths cannot sufficiently be transmitted, so that the failures described above can arise and lead to a reduction in welding quality.

It is preferable that the laser ray absorbing material is made of a laser ray absorbing colored resin composition (preferably thermoplastic resin composition) incorporating at least carbon black as a laser ray absorbing black colorant. In this case, it is preferable that the carbon black used be 18 to 30 nm in primary particle diameter. By using such carbon black, it is possible to obtain a laser ray absorbing material that contains highly dispersed carbon black, and that absorbs laser ray at high absorption rates.

Also, as a laser ray absorbing black colorant, a nigrosine dye can be used along with carbon black. By using a nigrosine dye, the laser absorption rate can be adjusted as appropriate. As the nigrosine dye, a nigrosine dye belonging to C.I. Solvent Black 7 is preferable. A laser ray absorbing material can also be obtained from a laser ray absorbing colored resin composition not using carbon black as the laser ray absorbing black colorant, but using another laser ray absorbent (for example, phthalocyanine series, cyanine series, metal complexes etc.) (or using another laser ray absorbing colorant [for example, aniline black]).

Also, the laser ray absorbing material may be formed with a non-black laser ray absorbing colored resin composition containing a colorant other than carbon black and a laser ray absorbent exemplified by phthalocyanine series, cyanine series, metal complexes and the like (or using another laser ray absorbing colorant). The laser ray absorbing material may also be formed with a laser ray absorbing colored resin composition containing a laser ray absorbing colorant other than carbon black.

A laser ray absorbing material can be prepared by molding a laser ray absorbing colored resin composition in the same manner as with a laser ray transmitting material. The laser ray absorbing colored resin composition can further contain the aforementioned various colorants, various organic dyes and pigments, additives and the like that can be used to prepare a laser ray transmitting material. The material used to prepare the laser ray absorbing material can be chosen from a broad range of materials because there is no limitation of laser transmission compared with the material used for the laser ray transmitting material. The amount of colorant used in the laser ray absorbing colored resin composition may, for example, be 0.01 to 10% by weight relative to the resin (preferably thermoplastic resin), and is preferably 0.05 to 5% by weight.

The laser ray absorbing thin layer may, for example, be a thinly formed laser ray absorbing material (for example, film-like article), or may be one formed on one or both of the two materials to be subjected to laser welding. In the latter case, the laser ray absorbing thin layer can be formed by, for example, applying (or printing etc.) and solidifying an ink or paint that absorbs laser ray by containing a colorant used in the above-described laser ray absorbing material on the subject face.

As examples of such laser ray absorbing inks, inks wherein a laser ray absorbent is dissolved or dispersed in an organic solvent can be mentioned. As preferable ink compositions for application to PPS resin, inks comprising at least an alcohol or glycol solvent, a laser ray absorbent soluble in the solvent, and a resin soluble in the aforementioned solvent can be mentioned. Such a laser ray absorbing ink can contain additives such as a pH regulator, viscosity regulator, antiseptic, antioxidant, and light stabilizer. The laser ray absorbent soluble in an organic solvent is preferably nigrosine.

Next, a method of producing a laser welded product of a laser ray transmitting material made of the laser ray transmitting colored resin composition of the present invention and a laser ray absorbing material made of a laser ray absorbing composition, or a laser welded product obtained by welding laser ray transmitting materials via a laser ray absorbing thin layer, is described.

Laser welded products obtained by the production method of the present invention include not only those obtained by a single time of laser welding, but also those obtained by a plurality of times of laser welding. As an example of a plurality of times of laser welding, laser welding with a laser ray absorbing material or laser ray absorbing thin layer inserted between laser ray transmitting materials can be mentioned. When a laser ray absorbing thin layer having a sufficiently thin laser ray absorbing material is used, welding can be achieved by irradiation with laser ray only from one laser ray transmitting material (irradiation with laser ray from each of the two laser ray transmitting materials is possible); however, in the case of a relatively thick laser ray absorbing material, laser welding must be performed by irradiation (may be simultaneous or sequential) with laser ray from each of the two laser ray transmitting materials between which the laser ray absorbing material is put.

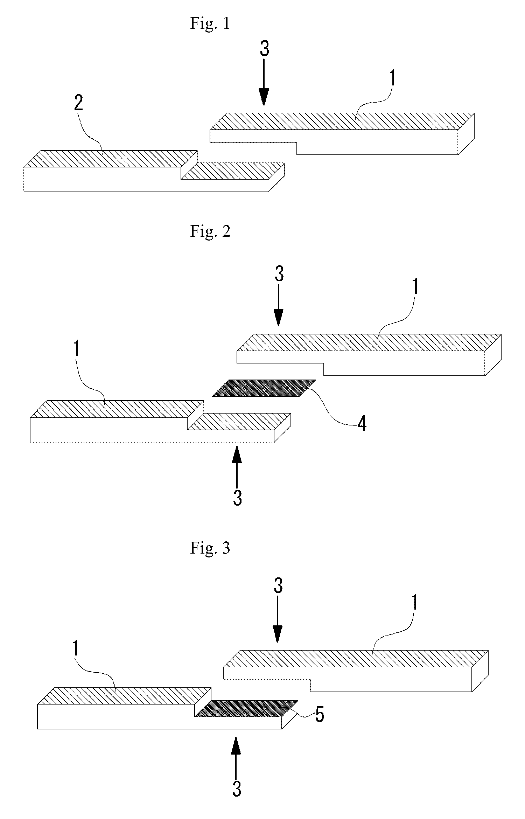

Example Process for laser welded Product 1 (Figure 1)

(A) Laser ray transmitting material 1 is formed using the laser ray transmitting colored resin composition of the present invention.

(B) The portions to be welded of the laser ray absorbing material 2 made of a PPS resin composition and the aforementioned laser ray transmitting material 1 are brought into contact with each other.

(C) Next, the aforementioned laser ray transmitting material 1 is irradiated with laser ray 3, while adjusting the laser ray 3 as appropriate, so that it passes through said laser ray transmitting material 1 and is absorbed by the aforementioned laser ray absorbing material 2. This irradiation is performed while scanning the appropriate portion.

(D) The laser ray 3 passes through the laser ray transmitting material 1 and reaches the laser ray absorbing material 2, where it is absorbed by the laser ray absorbing material 2 to generate heat by the effect of laser ray absorbent and so on, and the two materials 1 and 2 are fused by thermal melting.

(E) Upon cooling and solidification of the fused portion of the two materials 1 and 2, the portions to be welded of the aforementioned laser ray transmitting material 1 and the laser ray absorbing material 2 become joined together. Example Process for laser welded Product 2 (Figure 2, Figure 3)

(F) A plurality of laser ray transmitting materials 1 are formed using the laser ray transmitting colored resin composition of the present invention.

(G) Laser ray absorbing thin layer 4 (for example, a laser ray absorbing film made of PPS resin composition) is interlaid between the portions to be welded of the aforementioned plurality of laser ray transmitting materials 1. Alternatively, a laser ray absorbing thin layer 5 is formed on one (or both) of the two faces to be welded of the aforementioned plurality of laser ray transmitting materials 1. This laser ray absorbing thin layer 5 can be formed by, for example, applying (or printing etc.) and solidifying a laser ray absorbing resin ink on the subject face.

(H) Next, laser ray transmitting materials 1 are irradiated with laser rays 3 from a plurality of directions (the side of one laser ray transmitting material 1 and the side of the other laser ray transmitting material 1), while adjusting each laser ray 3 as appropriate so that it passes through the laser ray transmitting materials 1 and is absorbed by the aforementioned laser ray absorbing thin layer 4 (5). This irradiation is performed while scanning the appropriate portion.

(I) Each of the laser rays 3 from a plurality of directions passes throug the laser ray transmitting material 1 and reaches the laser ray absorbing thin layer 4 (or 5), where it is absorbed by the laser ray absorbing thin layer 4 (or 5) to generate heat by the effect of the laser ray absorbent and so on, and the two laser ray transmitting materials 1 and the laser ray absorbing thin layer 4 (or 5) constituting the layer containing the laser ray absorbent are fused by thermal melting. It is also possible to allow the laser ray absorbing thin layer 4 (or 5) to generate heat to thermally melt each of the two laser ray transmitting materials 1 and the laser ray absorbing thin layer 4 (or 5) constituting the layer containing the laser ray absorbent, and fuse them together, by irradiating one laser ray transmitting material 1 with laser ray 3.

(J) Upon cooling and solidification of the fusion portions of the two laser ray transmitting materials 1 and the laser ray absorbing material 4 (or 5), the portions to be welded of the two laser ray transmitting materials 1 become joined via the laser ray absorbing material 4 (or 5).

In the laser welded product production method of the present invention, because the gap between the two materials at the contact portion of the laser ray absorbing material is prevented from increasing thanks to the high molding accuracy of the laser ray transmitting material, laser welding can be performed using relatively simple equipment. In the laser welded product production method of the present invention, the gap between the aforementioned two materials is preferably 0 to 0.05 mm.

Laser welded products obtained by the production method of the present invention exhibit high fastness such as to heat and light, have a good anti-migration property, chemical resistance, etc., and exhibit a brilliant color.

As examples of major applications for laser welded products obtained by the laser ray transmitting colored resin composition of the present invention, laser ray transmitting material, and the production method of the present invention, office automation equipment, printed circuit board, automobile components can be mentioned. More specifically, for example, instrument panels in interiors and resonators (silencers) in engine rooms can be mentioned. Traditionally, special measures such as surface pretreatment have been necessary because of difficulty in using an adhesive for untreated surface of thermoplastic resin parts in their joining. In contrast, laser welding obviates the need for painstaking steps such as pretreatment and resin alloying, and is also favorable in terms of toughness and recyclability compared with the use of an adhesive.

EXAMPLES

The present invention is hereinafter described in more detail by means of, but is not limited to, the following examples.

(Example 1)

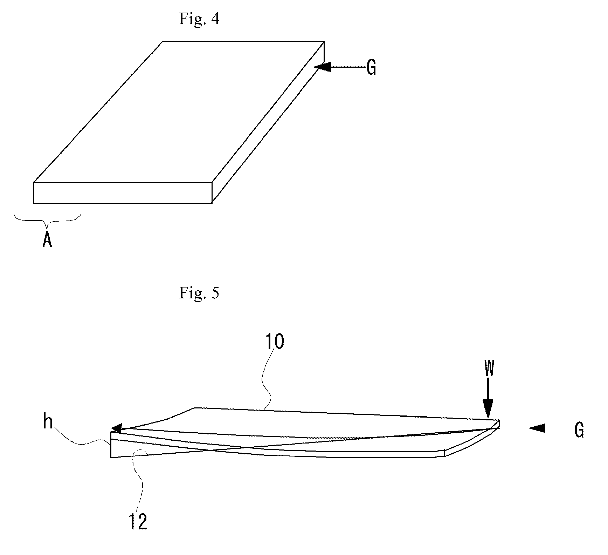

eBIND LTW-8400C (laser ray transmitting colorant for PPS resin manufactured by Orient Chemical Industries, Ltd. [both "eBIND" and "LTW" are registered trademarks]) and FORTRON 1130A6 (PPS resin containing 30% by weight glass fiber manufactured by Polyplastics Co., Ltd. [product name]) were weighed and blended in a ratio for a 25-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 130°C using an injection molding machine (manufactured by Toyo Machinery & Metal Co., Ltd., product name: Si-50); a uniformly colored black laser ray transmitting test piece having good appearance and surface gloss (Figure 4) was obtained.

(Example 2)

eBIND LTW-8400C and FORTRON 1130A6 were weighed and blended in a ratio for a 25-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 140°C using an injection molding machine (manufactured by Toyo Machinery & Metal Co., Ltd., product name: Si-50); a uniformly colored black laser ray transmitting test piece having good appearance and surface gloss was obtained.

(Example 3)

eBIND LTW-8400C and FORTRON 1130A6 were weighed and blended in a ratio for a 25-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a uniformly colored black laser ray transmitting test piece having good appearance and surface gloss was obtained.

(Example 4)

eBIND LTW-8400C and FORTRON 1140A6 (PPS resin containing 40% by weight glass fiber manufactured by Polyplastics Co., Ltd. [product name]) were weighed and blended in a ratio for a 10-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a uniformly colored black laser ray transmitting test piece having good appearance and surface gloss was obtained.

(Example 5)

eBIND LTW-8400C and FORTRON 1140A6 were weighed and blended in a ratio for a 25-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a uniformly colored black laser ray transmitting test piece having good appearance and surface gloss was obtained.

(Example 6)

eBIND LTW-8400C and FORTRON 1140A6 were weighed and blended in a ratio for a 50-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a uniformly colored black laser ray transmitting test piece having good appearance and surface gloss was obtained.

(Example 7)

eBIND LTW-8400C and TORELINA A604 (PPS resin containing 40% by weight glass fiber manufactured by Toray Industries, Inc. [product name]) were weighed and blended in a ratio for a 25-fold dilution of the former in the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a uniformly colored black laser ray transmitting test piece having good appearance and surface gloss was obtained.

(Comparative Example 1)

A mixed colorant of the purple dye C.I. Solvent Violet 13 and the yellow dye C.I. Solvent Yellow 114 (blending ratio by weight 5:1) and FORTRON 1130A6 were weighed and blended in a ratio for addition of 0.2% by weight of the former to the latter; the blend obtained was injection-molded in a mold with a rectangular parallelepiped cavity of 80 mm length x 50 mm width x 1 mm thickness by an ordinary method at a cylinder temperature of 320°C and a mold temperature of 120°C using an injection molding machine (manufactured by Toyo Machinery & Metal Co., Ltd., product name: Si-50); a black laser ray transmitting test piece having poor appearance and surface gloss was obtained.

(Comparative Example 2)

A mixed colorant of the purple dye C.I. Solvent Violet 13 and the yellow dye C.I. Solvent Yellow 114 (blending ratio by weight 5:1) and FORTRON 1140A6 were weighed and blended in a ratio for addition of 0.2% by weight of the former to the latter; the blend obtained was injection-molded in a mold with a rectangular parallelepiped cavity of 80 mm length x 50 mm width x 1 mm thickness by an ordinary method at a cylinder temperature of 320°C and a mold temperature of 90°C using an injection molding machine (manufactured by Toyo Machinery & Metal Co., Ltd., product name: Si-50); a black laser ray transmitting test piece having poor appearance and surface gloss was obtained.

(Comparative Example 3)

The purple pigment C.I. Pigment Violet 37 and FORTRON 1140A6 were weighed and blended in a ratio for addition of 0.2% by weight of the former to the latter; the blend obtained was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a purple laser ray transmitting test piece having poor appearance and surface gloss was obtained.

(Comparative Example 4)

FORTRON 1130A6 was injection-molded in a mold with a rectangular parallelepiped cavity of 80 mm length x 50 mm width x 1 mm thickness by an ordinary method at a cylinder temperature of 320°C and a mold temperature of 150°C using an injection molding machine (manufactured by Toyo Machinery & Metal Co., Ltd., product name: Si-50); a yellowish white laser ray transmitting test piece was obtained.

(Physical property assessments)

For the laser ray transmitting colored resin compositions and laser ray transmitting test pieces obtained in Examples 1 to 7 and Comparative Examples 1 to 4, physical property assessments were performed as described below. The results are shown in Table 1 and Table 2.

(1) DSC measurement

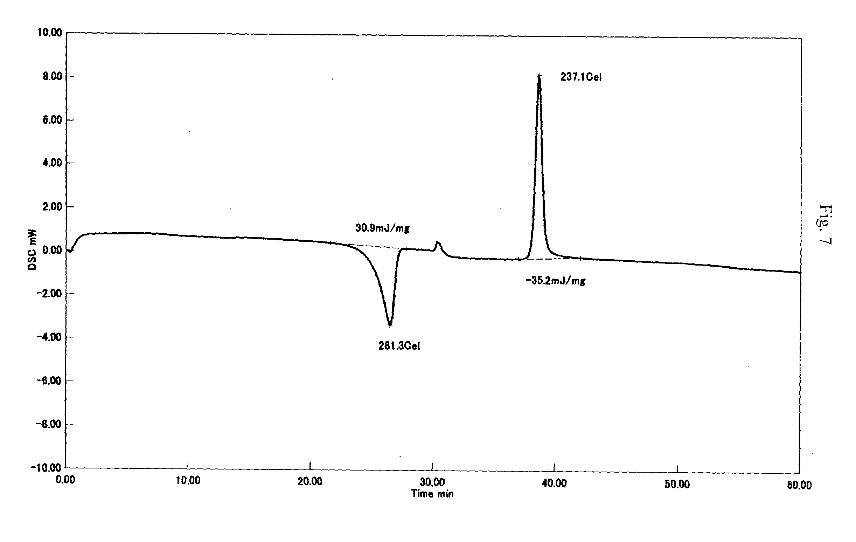

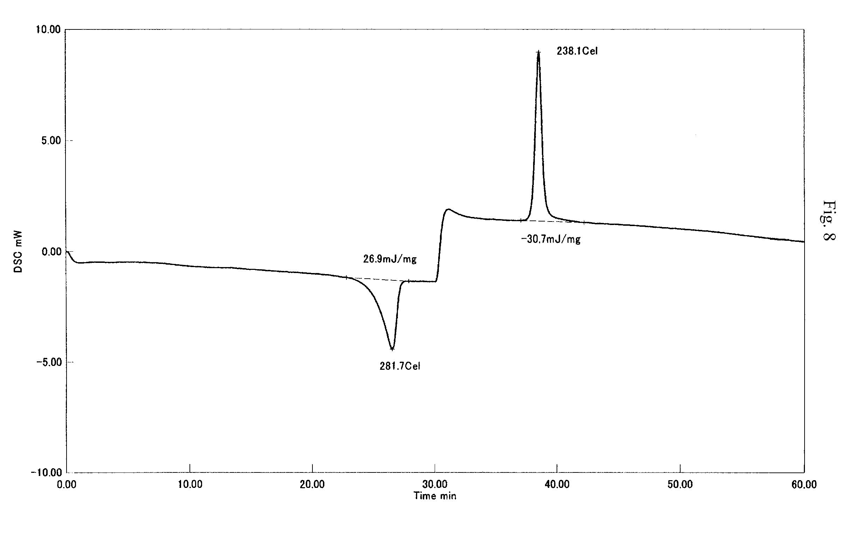

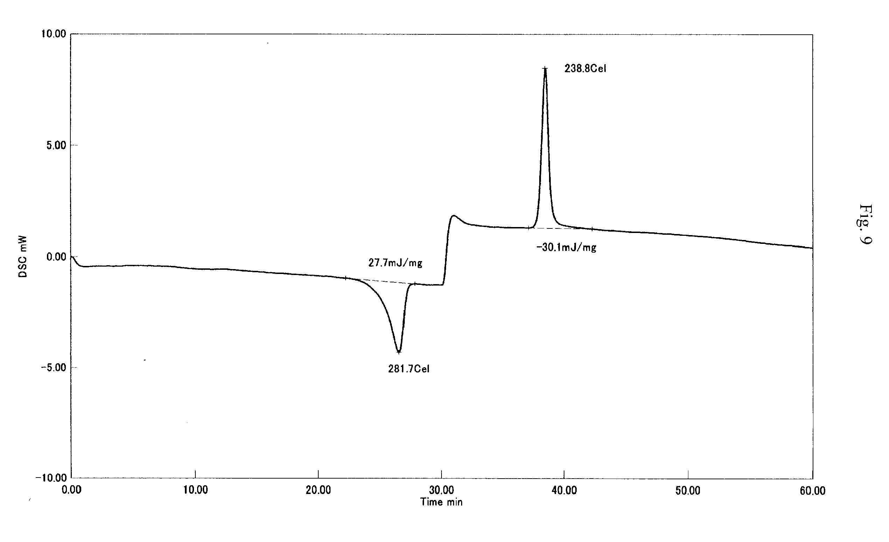

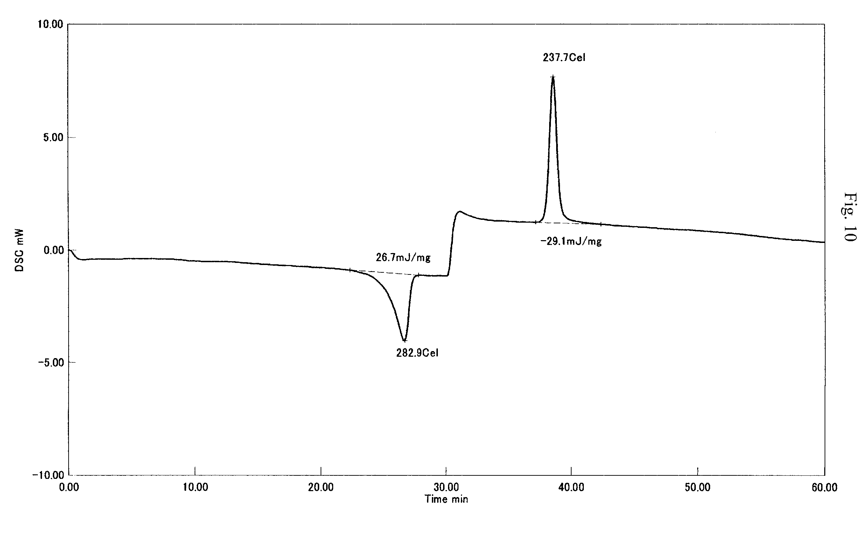

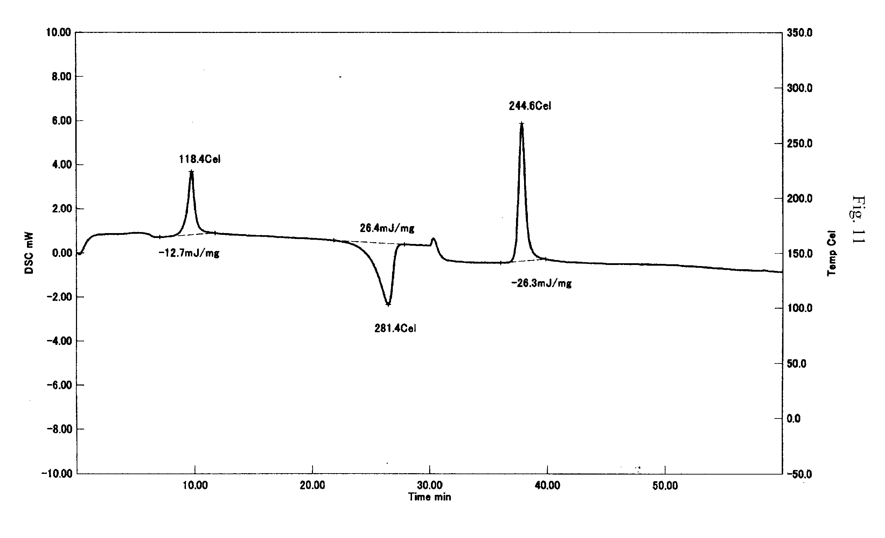

A portion A of a laser ray transmitting test piece 10 (Close to the opposite corner to gate position G, as shown in Figure 4) was cut using nippers to obtain a small piece, and this was treated by a temperature rise from 30°C to 330°C at a rate of 10°C/min and a subsequent temperature reduction from 330°C to 30°C at a rate of 10°C/min using a DSC meter (manufactured by Seiko Instruments Inc., product name: SII EXSTAR6000) to determine the recrystallization point, melting point and crystallization point thereof.
The DSC curves obtained in Example 3, Example 4, Example 5, Example 6, and Comparative Example 2 are shown in Figure 7, Figure 8, Figure 9, Figure 10, and Figure 11, respectively.

(2) TG/DTA measurement

Colorant powder samples of the respective Examples and Comparative Examples were treated by a temperature rise from 30°C to 550°C at a rate of 10°C/min in an atmosphere of air supply at 200 ml/min using a TG/DTA meter (manufactured by Seiko Instruments Inc., product name: SII EXSTAR6000) to determine whether or not an endothermic peak was present between 200°C and 300°C.

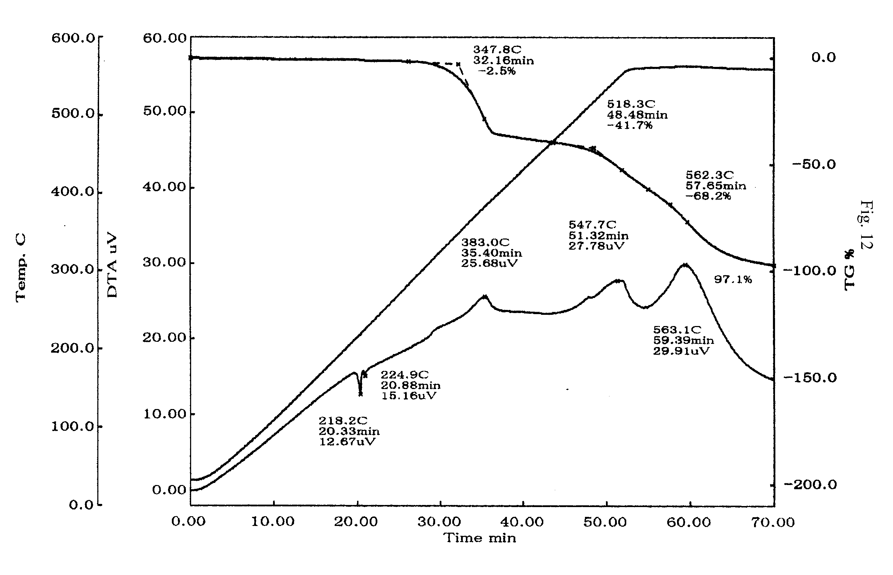

TG/DTA curves for eBIND LTW-8400C are shown in Figure 12.

(3) Glossiness measurement

The glossiness of each laser ray transmitting test piece at a beam angle of 60 degrees was measured using a glossmeter (manufactured by Suga Test Instruments Co., Ltd., product name: HG-268 model).

Glossiness is judged to be higher as the measured value increases.

(4) Warpage

Each laser ray transmitting test piece 10 was placed on a horizontal plane 12 as shown in Figure 5, a corner of each laser ray transmitting test piece 10 close to gate position G was pressed with a 100-g weight W, and the height h of the opposite corner above the horizontal plane 12 was measured using a vernier caliper to determine the warpage.

(5) Laser welding test

0.5 parts of carbon black was added to glass-fiber-containing resins used in the Examples and Comparative Examples, and a laser ray absorbing test piece 14 was prepared in the same manner as the Examples and Comparative Examples.

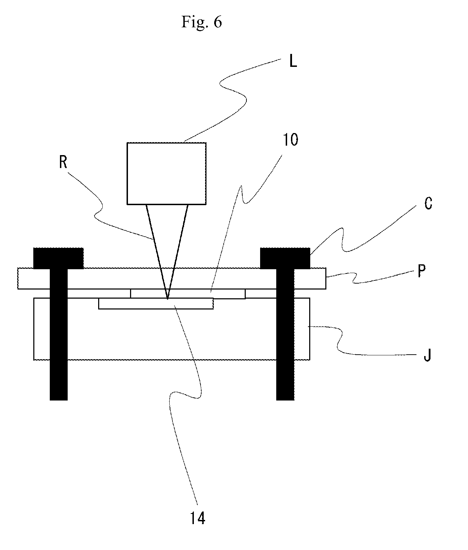

Next, as shown in Figure 6, laser ray transmitting test piece 10 and laser ray absorbing test piece 14 were superposed using jig J, glass plate P was mounted thereon, and the test pieces were set under pressures (0, 0.2 MPa, 0.4 MPa) with an air clamp C. From above the glass plate, the laser ray transmitting test piece 10 was irradiated with the laser ray R (output 25W, scanning speed 5 mm/sec, spot diameter 0.6 mm) with scanning in a distance of 30 mm in the depth direction in Figure 6 using a diode-laser welding machine L [wavelength: 940 nm, continuous] (manufactured by Fine Devices Company).

(6) Tensile strength test

Each welded product obtained in (5) above was subjected to a tensile strength test in the longitudinal direction (direction for departing the welded portion) at a tension rate of 10 mm/min using tensile testing machine (AG-50kNE, manufactured by Shimadzu Corporation) in accordance with JIS K7113-1995, in order to determine the tensile weld strength thereof.

Table 1

| | Ingredient used | | Mold temperature (°C) | DSC measurement (colored resin composition) | | | DSC measurement (noncolored resin composition) | | |
|---|---|---|---|---|---|---|---|---|---|
| | Resin used (GF content %) | Colorant used | | Recrystallization temperature (°C) | Melting point (°C) | Solidification point $T_C$ (°C) | Recrystallization temperature (°C) | Melting point (°C) | Solidification point $T_N$ (°C) |
| Example 1 | 1130A6 (30) | LTW8400C 25-fold dilution | 130 | - | 281.0 | 236.7 | 119.8 | 281.9 | 228.1 |
| Example 2 | 1130A6 (30) | LTW8400C 25-fold dilution | 140 | - | 281.1 | 237.0 | - | 281.6 | 224.7 |
| Example 3 | 1130A6 (30) | LTW8400C 25-fold dilution | 150 | - | 281.3 | 237.1 | - | 281.2 | 224.0 |
| Comparative Example 1 | 1130A6 (30) | *1 0.2% | 150 | 117.1 | 281.1 | 223.5 | - | 281.2 | 224.0 |
| Comparative Example 3 | 1130A6 (30) | Pigment Violet37 0.2% | 150 | - | 281.5 | 225.9 | - | 281.2 | 224.0 |
| Comparative Example 4 | 1130A6 (30) | - | 150 | - | - | - | - | 281.2 | 224.0 |
| Example 4 | 1140A6 (40) | LTW8400C 10-fold dilution | 150 | - | 281.7 | 238.1 | - | 282.3 | 228.5 |
| Example 5 | 1140A6 (40) | LTW8400C 25-fold dilution | 150 | - | 281.7 | 238.8 | - | 282.3 | 228.5 |
| Example 6 | 1140A6 (40) | LTW8400C 50-fold dilution | 150 | - | 282.9 | 237.7 | - | 282.3 | 228.5 |
| Comparative Example 2 | 1140A6 (40) | *1 0.2% | 90 | 118.4 | 281.4 | 244.6 | 117.4 | 281.8 | 246.8 |

|  | Ingredient used | | Mold temperature (°C) | DSC measurement (colored resin composition) | | | DSC measurement (noncolored resin composition) | | |
|---|---|---|---|---|---|---|---|---|---|
|  | Resin used (GF content %) | Colorant used |  | Recrystallization temperature (°C) | Melting point (°C) | Solidification point $T_C$ (°C) | Recrystallization temperature (°C) | Melting point (°C) | Solidification point $T_N$ (°C) |
| Example 7 | A604 (40) | LTW8400C 25-fold dilution | 150 | - | 281.8 | 233.2 | - | 281.8 | 224.0 |
| In Table 1, *1 represents a mixed colorant of C.I. Solvent Violet 13 and C.I. Solvent Yellow 114 (blending ratio by weight 5:1). | | | | | | | | | |

Table 2

| | Ingredient used | | DSC measurement $T_C$-$T_N$ (°C) | TG/DTA measurement Decomposition point(°C) | Glossiness | Warpage mm | Laser welding strength (N) | | |
| --- | --- | --- | --- | --- | --- | --- | --- | --- | --- |
| | Resin used (GF content %) | Colorant used | | | | | Clamp pressure 0 | Clamp pressure 0.2MPa | Clamp pressure 0.4MPa |
| Example 1 | 1130A6 (30) | LTW8400C 25-fold dilution | 8.6 | 257.6 | 105 | >0.5 | 710 | 780 | 780 |
| Example 2 | 1130A6 (30) | LTW8400C 25-fold dilution | 12.3 | 257.6 | 110 | > 0.5 | 655 | 735 | 740 |
| Example 3 | 1130A6 (30) | LTW8400C 25-fold dilution | 13.1 | 257.6 | 115 | >0.5 | 610 | 705 | 710 |
| Comparative Example 1 | 1130A6 (30) | *1 0.2% | -0.5 | 193.3 | 90 | 0.8 | 220 | 430 | 445 |
| Comparative Example 3 | 1130A6 (30) | Pigment Violet37 0.2% | 1.9 | None | 75 | 1.0 | 185 | 400 | 420 |
| Comparative Example 4 | 1130A6 (30) | - | - | - | 112 | > 0.5 | 600 | 695 | 710 |
| Example 4 | 1140A6 (40) | LTW8400C 10-fold dilution | 9.6 | 257.6 | 107 | >0.5 | 410 | 475 | 475 |
| Example 5 | 1140A6 (40) | LTW8400C 25-fold dilution | 10.3 | 257.6 | 110 | > 0.5 | 420 | 480 | 490 |
| Example 6 | 1140A6 (40) | LTW8400C 50-fold dilution | 9.2 | 257.6 | 113 | >0.5 | 450 | 495 | 500 |
| Comparative Example 2 | 1140A6 (40) | *1 0.2% | -2.2 | 193.3 | 75 | 1.2 | 110 | 330 | 355 |
| Example 7 | A604 (40) | LTW8400C 25-fold dilution | 5.7 | 257.6 | 102 | > 0.5 | 440 | 480 | 480 |

As shown in Table 2, when the warpage of the laser ray transmitting test piece was not more than 0.5 mm, practically sufficient weld strength between the laser ray transmitting test piece and the laser ray absorbing test piece even when the loading pressure essentially comprised the weight of the glass plate P under a clamp pressure of 0. In contrast, when the warpage of the laser ray transmitting test piece exceeded 0.5 mm, no sufficient weld strength was obtained due to the gap between the laser ray transmitting test piece and the laser ray absorbing test piece even when the clamp pressure was adjusted.

**Claims**

1. Laser ray transmitting colored resin composition containing at least a polyphenylene sulfide resin and a colorant, wherein said colorant has an endothermic peak between 200°C and 300°C as determined by TG/DTA thermal analysis, and the difference $T_C-T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

2. Laser ray transmitting colored resin composition of Claim 1, wherein the difference $T_C-T_N$ is not less than 5°C but not more than 30°C.

3. Laser ray transmitting material made of a laser ray transmitting colored resin composition, and having one exothermic energy peak and one endothermic energy peak as determined by DSC thermal analysis, said composition containing at least a polyphenylene sulfide resin and a colorant, wherein said colorant has an endothermic peak between 200°C and 300°C as determined by TG/DTA thermal analysis, and the difference $T_C-T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

4. Laser ray transmitting material of Claim 3, wherein the difference $T_C-T_N$ is not less than 5°C but not more than 30°C.

5. Laser ray transmitting material of Claim 3 or 4, wherein the glossiness is not less than 100 as determined at a beam angle of 60 degrees.

6. Laser ray transmitting material of Claim 3 or 4, wherein a warpage is not more than 0.5 mm.

7. Method of producing a laser ray transmitting material which comprises molding a laser ray transmitting colored resin composition so that said material has one exothermic energy peak and one endothermic energy peak as determined by DSC thermal analysis, said composition containing at least a polyphenylene sulfide resin and a colorant, wherein said colorant has an endothermic peak between 200°C and 300°C as determined by TG/DTA thermal analysis, and the difference $T_C-T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

8. Method of producing a laser welded product, which comprises irradiating a laser ray transmitting material, which is substantially in contact with a laser ray absorbing material, with a laser ray for laser welding so that said laser ray transmitting material transmits the laser ray and the laser ray is absorbed by said laser ray absorbing material, whereby the contact portions of said two materials are welded,
said laser ray transmitting material made of a laser ray transmitting colored resin composition, and having one exothermic energy peak and one endothermic energy peak as determined by DSC thermal analysis,
said composition containing at least a polyphenylene sulfide resin and a colorant, wherein said colorant has an endothermic peak between 200°C and 300°C as determined by TG/DTA thermal analysis, and the difference $T_C-T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

9. Method of producing a laser welded product of Claim 8, wherein the gap between said laser ray transmitting material and laser ray absorbing material at the contact portions is 0 to 0.05 mm.

10. Method of producing a laser welded product by welding one material as a laser ray transmitting material and another material together, which comprises irradiating said one material, which is substantially in contact with said another material via a laser ray absorbing thin layer, with a laser ray for laser welding so that said laser ray transmitting material transmits the laser ray and the laser ray is absorbed by said laser ray absorbing thin layer, whereby said two materials are welded via the laser ray absorbing thin layer,

said one material made of a laser ray transmitting colored resin composition, and having one exothermic energy peak and one endothermic energy peak as determined by DSC thermal analysis,

said composition containing at least a polyphenylene sulfide resin and a colorant, wherein said colorant has an endothermic peak between 200°C and 300°C as determined by TG/DTA thermal analysis, and the difference $T_C$-$T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

11. Laser welded product which comprises a laser ray transmitting material and a laser ray absorbing material welded with said laser ray transmitting material,

said laser ray transmitting material made of a laser ray transmitting colored resin composition, and having one exothermic energy peak and one endothermic energy peak as determined by DSC thermal analysis,

said composition containing at least a polyphenylene sulfide resin and a colorant, wherein said colorant has an endothermic peak between 200°C and 300°C as determined by TG/DTA thermal analysis, and the difference $T_C$-$T_N$ between the crystallization point $T_C$ of said laser ray transmitting colored resin composition and the crystallization point $T_N$ of the same composition as said laser ray transmitting colored resin composition except for not containing said colorant, as determined by DSC thermal analysis, is not less than 0°C.

Fig. 1

Fig. 2

Fig. 3

Fig. 4

Fig. 5

Fig. 6

Fig. 7

Fig. 8

Fig. 9

Fig. 10

Fig. 11

Fig. 12

**European Patent**
**Office**

## PARTIAL EUROPEAN SEARCH REPORT

which under Rule 45 of the European Patent Convention
shall be considered, for the purposes of subsequent
proceedings, as the European search report

Application Number

EP 06 11 9763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/003301 A1 (SUGAWARA SHUJI [JP] ET AL) 6 January 2005 (2005-01-06) * column 21, line 12, paragraph 180; table 1 * ----- | 1,7,8, 10,11 | INV. B29C65/16 C08K5/00 C08L81/02 |
| A | WO 2004/108827 A (TORAY INDUSTRIES [JP]; KOJIMA AKIRA [JP]; NISHI TAKESHI [JP]; IWAMURA) 16 December 2004 (2004-12-16) * abstract * | 1,7,8, 10,11 | ADD. C08K7/14 |
| A,P | -& EP 1 630 201 A (TORAY INDUSTRIES [JP]) 1 March 2006 (2006-03-01) * page 2, line 5 - line 6 * * page 2, line 45 - line 51 * * page 3, line 4 - line 5 * * page 3, line 46 - line 48 * * page 11, line 39 - line 43 * * page 16, line 55 - page 17, line 4; table 1 * ----- | | |
| P,X | WO 2006/038728 A (ORIENT CHEMICAL IND [JP]; SUGAWARA SHUJI [JP]; HATASE YOSHITERU [JP]) 13 April 2006 (2006-04-13) * page 35, line 5 - line 16 * * table 6 * * examples 9,10,13; table 8 * ----- | 1,7,8, 10,11 | TECHNICAL FIELDS SEARCHED (IPC) B29C C08K |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 1 February 2007 | Engel, Hermann |

EPO FORM 1503 03.82 (P04C07)

European Patent
Office

INCOMPLETE SEARCH
SHEET C

Application Number

EP 06 11 9763

Claim(s) searched incompletely:
     1-11

Claim(s) not searched:
        -

Reason for the limitation of the search:

Present Claims 1-11. relate to a product defined (inter alia) by
reference to the following unusual parameter:
Endothermic Peak temperature
.
The use of this unusual parameter in the present context is considered to
lead to a lack of clarity because the claim does not clearly identify the
products encompassed by it as the parameter cannot be clearly and
reliably determined by indications in the description or by objective
procedures which are usual in the art (such as e.g. substance
identification by C.I.# or chemical structure). This makes it impossible
to compare the claims to the prior art. As a result, the application does
not comply with the requirement of clarity under Article 84 EPC.

The lack of Clarity is to such an extent, that a meaningful search of the
whole claimed subject-matter of claim 1 could not be carried out (Rule 45
EPC). The extent of the search was consequently limited to the Examples
clearly defined in, and supported and disclosed by the description.

## ANNEX TO THE EUROPEAN SEARCH REPORT
## ON EUROPEAN PATENT APPLICATION NO.

EP 06 11 9763

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2007

| Patent document cited in search report | | Publication date | Patent family member(s) | Publication date |
|---|---|---|---|---|
| US 2005003301 | A1 | 06-01-2005 | NONE | |
| WO 2004108827 | A | 16-12-2004 | CN 1798808 A<br>EP 1630201 A1<br>KR 20060021340 A<br>US 2007021549 A1 | 05-07-2006<br>01-03-2006<br>07-03-2006<br>25-01-2007 |
| EP 1630201 | A | 01-03-2006 | CN 1798808 A<br>WO 2004108827 A1<br>KR 20060021340 A<br>US 2007021549 A1 | 05-07-2006<br>16-12-2004<br>07-03-2006<br>25-01-2007 |
| WO 2006038728 | A | 13-04-2006 | NONE | |

EPO FORM P0459

For more details about this annex : see Official Journal of the European Patent Office, No. 12/82

## REFERENCES CITED IN THE DESCRIPTION

**Patent documents cited in the description**

- JP HEI11170371 A
- JP SHO63118237 A
- JP 2002337236 A
- JP 2004066739 A